# EUROPEAN PATENT APPLICATION

(11) **EP 4 411 531 A1**
(43) Date of publication of application: **07.08.2024**
(21) Application number: 24154377.6
(22) Date of filing: 29.01.2024
(51) Int. Cl.: G06F 3/16

(54) **USE OF BIOMETRIC SIGNALS TO PERSONALIZE AUDIO**

(30) Priority: 01.02.2023 US 202318104701
(71) Applicant: Meta Platforms Technologies, LLC, Menlo Park, CA 94025 (US)
(72) Inventor: Ng, Sara, Menlo Park (US); Anderson, Melinda, Menlo Park (US); Shankar, Poornima, Menlo Park (US); Hajarolasvadi, Setare, Menlo Park (US); Chase, Katherine, Menlo Park (US); Miller, Christi, Menlo Park (US)
(74) Representative: Murgitroyd & Company

(57) **Abstract**

An audio system customizes presentation of audio content to a user based on biometric data of the user. Biometric data includes characteristics of the user's voice, the user's heart rate, the user's blood pressure, or other physiological data. From the biometric data of the user, the audio system determines a communication energy score for the user and retrieves one or more audio parameters for the location. The audio system updates one or more audio functions (e.g., noise suppression, beamforming, what audio is retrieved, etc.) based on the audio parameters determined for the communication energy score from the user's biometric data and modifies audio presented to the user based on the updated audio functions. The audio system may be integrated into a headset or another wearable device.

## Description

### TECHNICAL FIELD

This disclosure relates generally to artificial reality systems, and more specifically to updating audio presented to a user by an artificial reality system based on biometric data captured for the user of the artificial reality system.

### BACKGROUND

Wearable devices, such as artificial reality headsets, present audio to a user. For example, a wearable device includes one or more speakers or is coupled to one or more speakers, which present audio to a user. A condition of a user, such as a mood of the user, affects how the user perceives or responds to audio. For example, when a user is active one type of audio is preferred by the user, while a different type of audio is preferred by the user when the user is stationary. To modify audio presentation by conventional wearable devices, the user manually provides inputs to the wearable device to update audio or manually selects from one or more stored preferences stored by the wearable device. This increases an amount of interaction by the user with a wearable device, as changes in the user's condition cause the user to modify one or more parameters for audio presentation by the wearable device.

Additionally, audio presented by a wearable device may prompt responses from the user. For example, certain audio presented by a wearable device may startle a user or otherwise negatively affect a user (e.g., increase a user's heart rate, increase a user's blood pressure). These negative effects may decrease subsequent interaction with the wearable device by the user. To avoid such negative effects, conventional wearable devices require a user to manually modify audio presented by the wearable device. Such manual configuration of audio presented by a wearable device increases an amount of user interaction with a wearable device, increasing complexity of customizing audio presentation by a particular user.

### SUMMARY

Users have different preferences for audio presented by a wearable device, such as a headset, based on a condition of the user. For example, a user has a first set of preferences for audio presentation when the user is active and has a second set of preferences for audio presentation when the user is resting. Similarly, certain audio presented by a wearable device may startle the user or prompt a negative reaction from the user, causing the user to manually configure or select what audio is presented to the user to mitigate such negative reactions. Conventionally, to modify how the wearable device presents audio, the user provides multiple inputs to the wearable device through one or more user interfaces to modify the acoustic parameters. As a user's condition changes over time, based on content presented to the user and an environment of the user, the user may frequently interact with a wearable device to modify audio presentation to account for different conditions of the user. To simplify modification of audio presentation for a user that accounts for a condition of the user, a wearable device obtains biometric data of the user from one or more sensors and determines a communication energy score for the user based on the biometric data. Based on the communication energy score, the wearable device identifies a profile including one or more acoustic parameters used to modify audio presented to the user by an audio system of the wearable device. Determining the acoustic parameters from the communication energy score, which is based on biometric data of the user, allows the wearable device to dynamically modify presentation of audio for a user based on biometric data obtained for the user rather than have the user manually select or specify acoustic parameters based on changes in the user's condition.

According to a first aspect, there is provided a method comprising: obtaining biometric data for a user of an audio system, the biometric data including audio including a voice of the user from a sensor array; determining a communication energy score of the user from the biometric data for the user; determining a profile corresponding to the communication energy score, the profile including one or more acoustic parameters associated with the communication energy score; modifying audio content for presentation by one or more transducers of the audio system based on the one or more acoustic parameters included in the profile; and presenting the modified audio content to a user via the one or more transducers of the audio system.

Obtaining biometric data for the user of the audio system may comprise: capturing audio including the voice of the user from the sensor array; and obtaining physiological data of the user from one or more physiological sensors.

The physiological data may include one or more selected from a group consisting of: a heart rate, a blood pressure, a heart rate variability, an electrocardiogram, a temperature, and any combination thereof.

A physiological sensor may be included in a device external to the audio system.

Determining the communication energy score of the user from the biometric data for the user may comprise applying a trained model to the biometric data for the user. The model may be trained by: generating a set of training examples, each training example including biometric data and having a label indicating a communication energy score for a training example; applying the model to each training example of the set to generate an output for the training example; scoring the output for the training example using a loss function and the label of the training example; and updating one or more parameters of the model by backpropagation based on the scoring.

Modifying audio content for presentation by one or more transducers of the audio system based on the one or more acoustic parameters included in the profile may comprise selecting alternative audio to present to the user in response to determining the communication energy score user changing from a value to an alternative value within a threshold amount of time of audio being presented to the user.

Modifying audio content for presentation by one or more transducers of the audio system based on the one or more acoustic parameters included in the profile may comprise: determining an average communication energy score for the user; determining an extended communication energy score for the user during a time interval; prompting the user to select a set of acoustic parameters in response to a difference between the average communication energy score and the extended communication energy score exceeding a threshold; and modifying the audio content based on the selected set of acoustic parameters.

Modifying audio content for presentation by one or more transducers of the audio system based on the one or more acoustic parameters included in the profile may comprise enhancing audio from one or more sound sources captured by a sensor array of the audio system relative to audio from other sound sources captured by the sensor array.

Modifying audio content for presentation by one or more transducers of the audio system based on the one or more acoustic parameters included in the profile may comprise removing audio having one or more characteristics specified by the one or more acoustic parameters.

Modifying audio content for presentation by one or more transducers of the audio system based on the one or more acoustic parameters included in the profile may comprise selecting audio content having characteristics specified by the one or more acoustic parameters included in the profile.

According to a second aspect, there is provided a headset comprising: a frame; one or more display elements coupled to the frame, each display element configured to generate image light; a position sensor configured to generate data indicating a position of the headset in a local area; and an audio system including a transducer array configured to present audio, a sensor array configured to capture audio from a local area including the headset, and an audio controller, the audio controller including a processor and a computer readable storage medium having stored instructions that, when executed by the processor, cause the audio system to carry out the method of the first aspect. The storage medium may be non-transitory.

According to a third aspect, there is provided a computer readable storage medium having stored instructions that, when executed by a processor of an audio system, cause the audio system to carry out the method of the first aspect. The storage medium may be non-transitory.

According to a fourth aspect, there is provided a computer program product comprising instructions that, when executed by a processor of an audio system, cause the audio system to carry out the method of the first aspect.

### BRIEF DESCRIPTION OF THE DRAWINGS

FIG. 1A is a perspective view of a headset implemented as an eyewear device.
FIG. 1B is a perspective view of a headset implemented as a head-mounted display.
FIG. 2 is a block diagram of an audio system.
FIG. 3 is a block diagram of a system environment including an audio system and one or more physiological sensors.
FIG. 4 is a flowchart illustrating a method for modifying presentation of audio content for a user based on biometric data of the user.
FIG. 5 is an example database associating communication energy scores with profiles including acoustic parameters.
FIG. 6 is a process flow diagram of a method for modifying presentation of audio content for a user based on biometric data of the user.
FIG. 7 is a system that includes a headset.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Users have different preferences for audio presented by a wearable device, such as a headset, based on a condition of the user. For example, a user has a first set of preferences for audio presentation when the user is active and has a second set of preferences for audio presentation when the user is resting. Similarly, certain audio presented by a wearable device may startle the user or prompt a negative reaction from the user, causing the user to manually configure or select what audio is presented to the user to mitigate such negative reactions. Conventionally, to modify how the wearable device presents audio, the user provides multiple inputs to the wearable device through one or more user interfaces to modify the acoustic parameters. As a user's condition changes over time, based on content presented to the user and an environment of the user, the user may frequently interact with a wearable device to modify audio presentation to account for different conditions of the user.

To simplify modification of audio presentation for a user that accounts for a condition of the user, a wearable device obtains biometric data of the user from one or more sensors and determines a communication energy score for the user based on the biometric data. The biometric data may include characteristics of the user's voice determined from captured audio including the user's voice. Alternatively or additionally, the biometric data includes physiological data of the user captured by one or more physiological sensors. Example physiological data includes a heart rate, a blood pressure, a respiratory rate, an electrocardiogram, a temperature, or other physiological data. By applying a trained model to the biometric data of the user, the communication energy score of the user is determined. Thus, the communication energy score provides a metric based on the obtained biometric data of the user. Based on the communication energy score, the wearable device identifies a profile including one or more acoustic parameters used to modify audio presented to the user by an audio system of the wearable device. Determining the acoustic parameters from the communication energy score, which is based on biometric data of the user, allows the wearable device to dynamically modify presentation of audio for a user based on biometric data obtained for the user rather than have the user manually select or specify acoustic parameters based on changes in the user's condition.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, any of which may be presented in a single channel or in multiple channels (such as stereo video that produces a three-dimensional effect to the viewer). Additionally, in some examples, artificial reality may also be associated with applications, products, accessories, services, or some combination thereof, that are used to create content in an artificial reality and/or are otherwise used in an artificial reality. The artificial reality system that provides the artificial reality content may be implemented on various platforms, including a wearable device (e.g., headset) connected to a host computer system, a standalone wearable device (e.g., headset), a mobile device or computing system, or any other hardware platform capable of providing artificial reality content to one or more viewers.

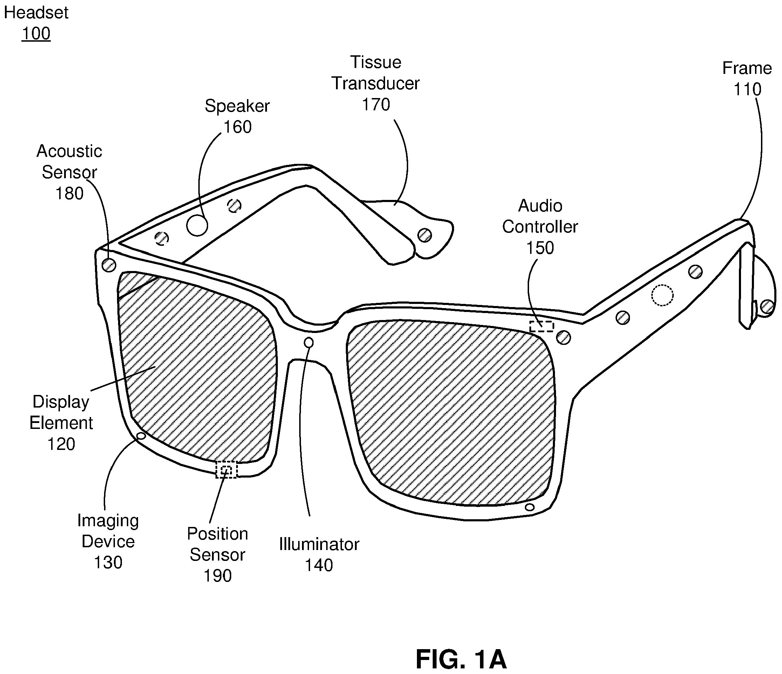

FIG. 1A is a perspective view of a headset 100 implemented as an eyewear device. In some examples, the eyewear device is a near eye display (NED). In general, the headset 100 may be worn on the face of a user such that content (e.g., media content) is presented using a display assembly and/or an audio system. However, the headset 100 may also be used such that media content is presented to a user in a different manner. Examples of media content presented by the headset 100 include one or more images, video, audio, or some combination thereof. The headset 100 includes a frame, and may include, among other components, a display assembly including one or more display elements 120, a depth camera assembly (DCA), an audio system, and a position sensor 190. While FIG. 1A illustrates the components of the headset 100 in example locations on the headset 100, the components may be located elsewhere on the headset 100, on a peripheral device paired with the headset 100, or some combination thereof. Similarly, there may be more or fewer components on the headset 100 than what is shown in FIG. 1A.

The frame 110 holds the other components of the headset 100. The frame 110 includes a front part that holds the one or more display elements 120 and end pieces (e.g., temples) to attach to a head of the user. The front part of the frame 110 bridges the top of a nose of the user. The length of the end pieces may be adjustable (e.g., adjustable temple length) to fit different users. The end pieces may also include a portion that curls behind the ear of the user (e.g., temple tip, ear piece).

The one or more display elements 120 provide light to a user wearing the headset 100. As illustrated the headset includes a display element 120 for each eye of a user. In some examples, a display element 120 generates image light that is provided to an eyebox of the headset 100. The eyebox is a location in space that an eye of user occupies while wearing the headset 100. For example, a display element 120 may be a waveguide display. A waveguide display includes a light source (e.g., a two-dimensional source, one or more line sources, one or more point sources, etc.) and one or more waveguides. Light from the light source is in-coupled into the one or more waveguides which outputs the light in a manner such that there is pupil replication in an eyebox of the headset 100. In-coupling and/or outcoupling of light from the one or more waveguides may be done using one or more diffraction gratings. In some examples, the waveguide display includes a scanning element (e.g., waveguide, mirror, etc.) that scans light from the light source as it is in-coupled into the one or more waveguides. Note that in some examples, one or both of the display elements 120 are opaque and do not transmit light from a local area around the headset 100. The local area is the area surrounding the headset 100. For example, the local area may be a room that a user wearing the headset 100 is inside, or the user wearing the headset 100 may be outside and the local area is an outside area. In this context, the headset 100 generates VR content. Alternatively, in some examples, one or both of the display elements 120 are at least partially transparent, such that light from the local area may be combined with light from the one or more display elements to produce AR and/or MR content.

In some examples, a display element 120 does not generate image light, and instead is a lens that transmits light from the local area to the eyebox. For example, one or both of the display elements 120 may be a lens without correction (non-prescription) or a prescription lens (e.g., single vision, bifocal and trifocal, or progressive) to help correct for defects in a user's eyesight. In some examples, the display element 120 may be polarized and/or tinted to protect the user's eyes from the sun.

In some examples, the display element 120 may include an additional optics block (not shown). The optics block may include one or more optical elements (e.g., lens, Fresnel lens, etc.) that direct light from the display element 120 to the eyebox. The optics block may, e.g., correct for aberrations in some or all of the image content, magnify some or all of the image, or some combination thereof.

The DCA determines depth information for a portion of a local area surrounding the headset 100. The DCA includes one or more imaging devices 130 and a DCA controller (not shown in FIG. 1A), and may also include an illuminator 140. In some examples, the illuminator 140 illuminates a portion of the local area with light. The light may be, e.g., structured light (e.g., dot pattern, bars, etc.) in the infrared (IR), IR flash for time-of-flight, etc. In some examples, the one or more imaging devices 130 capture images of the portion of the local area that include the light from the illuminator 140. As illustrated, FIG. 1A shows a single illuminator 140 and two imaging devices 130. In alternate examples, there is no illuminator 140 and at least two imaging devices 130.

The DCA controller computes depth information for the portion of the local area using the captured images and one or more depth determination techniques. The depth determination technique may be, e.g., direct time-of-flight (ToF) depth sensing, indirect ToF depth sensing, structured light, passive stereo analysis, active stereo analysis (uses texture added to the scene by light from the illuminator 140), some other technique to determine depth of a scene, or some combination thereof.

The audio system provides audio content. The audio system includes a transducer array, a sensor array, and an audio controller 150. However, in other examples, the audio system may include different and/or additional components. Similarly, in some cases, functionality described with reference to the components of the audio system can be distributed among the components in a different manner than is described here. For example, some or all of the functions of the audio controller 150 may be performed by a remote server.

The transducer array presents sound to user. The transducer array includes a plurality of transducers. A transducer may be a speaker 160 or a tissue transducer 170 (e.g., a bone conduction transducer or a cartilage conduction transducer). Although the speakers 160 are shown exterior to the frame 110, the speakers 160 may be enclosed in the frame 110. In some examples, instead of individual speakers for each ear, the headset 100 includes a speaker array comprising multiple speakers integrated into the frame 110 to improve directionality of presented audio content. The tissue transducer 170 couples to the head of the user and directly vibrates tissue (e.g., bone or cartilage) of the user to generate sound. The number and/or locations of transducers may be different from what is shown in FIG. 1A.

The sensor array detects sounds within the local area of the headset 100. The sensor array includes a plurality of acoustic sensors 180. An acoustic sensor 180 captures sounds emitted from one or more sound sources in the local area (e.g., a room). Each acoustic sensor is configured to detect sound and convert the detected sound into an electronic format (analog or digital). The acoustic sensors 180 may be acoustic wave sensors, microphones, sound transducers, or similar sensors that are suitable for detecting sounds.

In some examples, one or more acoustic sensors 180 may be placed in an ear canal of each ear (e.g., acting as binaural microphones). In some examples, the acoustic sensors 180 may be placed on an exterior surface of the headset 100, placed on an interior surface of the headset 100, separate from the headset 100 (e.g., part of some other device), or some combination thereof. The number and/or locations of acoustic sensors 180 may be different from what is shown in FIG. 1A. For example, the number of acoustic detection locations may be increased to increase the amount of audio information collected and the sensitivity and/or accuracy of the information. The acoustic detection locations may be oriented such that the microphone is able to detect sounds in a wide range of directions surrounding the user wearing the headset 100.

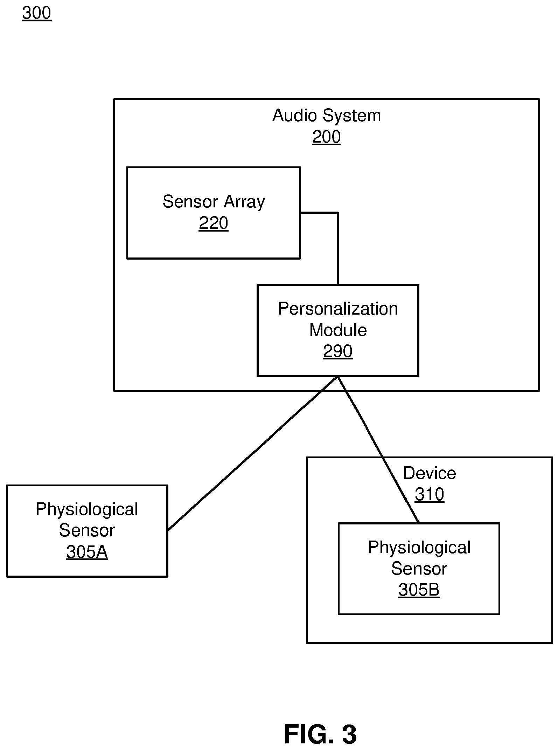

The audio controller 150 processes information from the sensor array that describes sounds detected by the sensor array. The audio controller 150 may comprise a processor and a computer-readable storage medium. The audio controller 150 may be configured to generate direction of arrival (DOA) estimates, generate acoustic transfer functions (e.g., array transfer functions and/or head-related transfer functions), track the location of sound sources, form beams in the direction of sound sources, classify sound sources, generate sound filters for the speakers 160, or some combination thereof. As further described below in conjunction with FIGS. 3-6, the audio controller 150 obtains biometric data of a user of the headset 100, such as from the acoustic sensor 180 or from one or more physiological sensors (which may be included in the headset 100 or in other devices configured to communicate with the headset 100) and from user interactions with the headset 100. Based on the obtained biometric data, the audio controller 150 determines a communication energy score for the user and retrieves a profile for the determined communication energy score. The profile includes one or more acoustic parameters specifying modification of audio by the audio controller 150 prior to presentation of the audio to the user. This allows the audio controller 150 to dynamically determine how to modify audio based on biometric data of the user, which provides a proxy for a user's reaction to audio content that is presented, as well as to the local area surrounding the headset 100.

The position sensor 190 generates one or more measurement signals in response to motion of the headset 100. The position sensor 190 may be located on a portion of the frame 110 of the headset 100. The position sensor 190 may include an inertial measurement unit (IMU). Examples of position sensor 190 include: one or more accelerometers, one or more gyroscopes, one or more magnetometers, another suitable type of sensor that detects motion, a type of sensor used for error correction of the IMU, or some combination thereof. The position sensor 190 may be located external to the IMU, internal to the IMU, or some combination thereof.

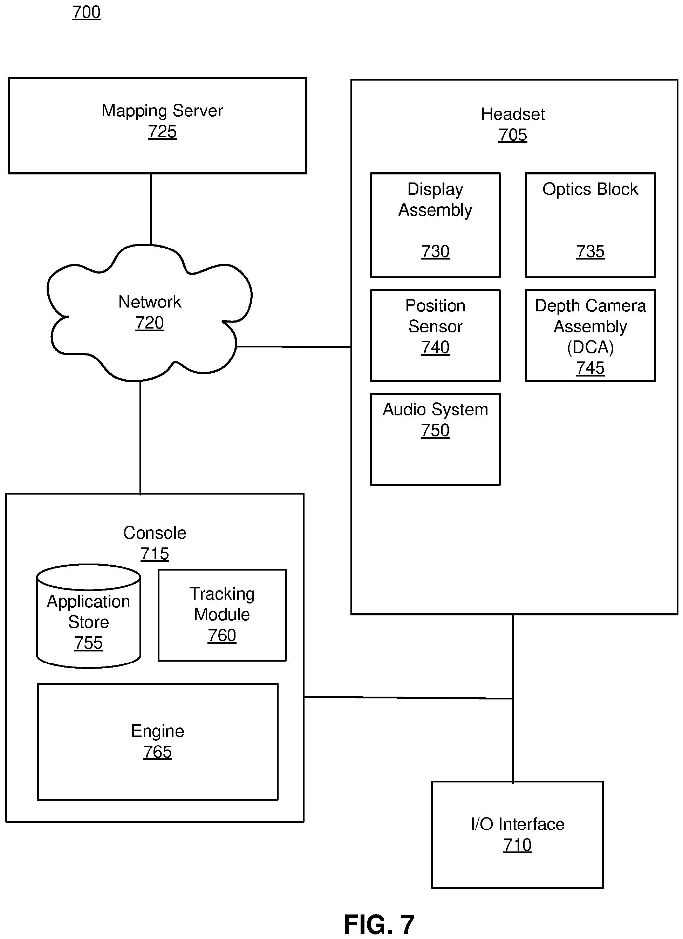

In some examples, the headset 100 may provide for simultaneous localization and mapping (SLAM) for a position of the headset 100 and updating of a model of the local area. For example, the headset 100 may include a passive camera assembly (PCA) that generates color image data. The PCA may include one or more RGB cameras that capture images of some or all of the local area. In some examples, some or all of the imaging devices 130 of the DCA may also function as the PCA. The images captured by the PCA and the depth information determined by the DCA may be used to determine parameters of the local area, generate a model of the local area, update a model of the local area, or some combination thereof. Furthermore, the position sensor 190 tracks the position (e.g., location and pose) of the headset 100 within the room. Additional details regarding the components of the headset 100 are discussed below in connection with FIG 7.

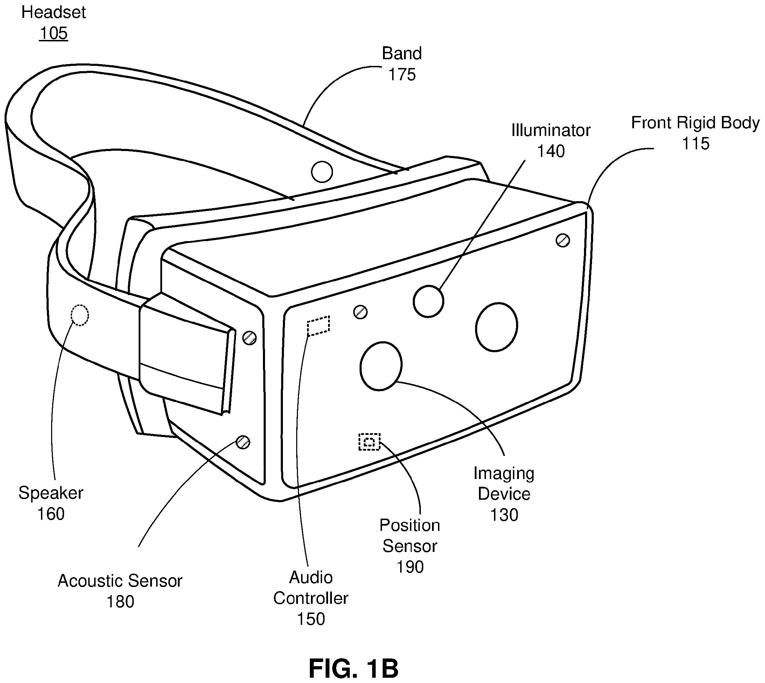

FIG. 1B is a perspective view of a headset 105 implemented as a HMD. In examples that describe an AR system and/or a MR system, portions of a front side of the HMD are at least partially transparent in the visible band (~380 nm to 750 nm), and portions of the HMD that are between the front side of the HMD and an eye of the user are at least partially transparent (e.g., a partially transparent electronic display). The HMD includes a front rigid body 115 and a band 175. The headset 105 includes many of the same components described above with reference to FIG. 1A, but modified to integrate with the HMD form factor. For example, the HMD includes a display assembly, a DCA, an audio system, and a position sensor 190. FIG. 1B shows the illuminator 140, a plurality of the speakers 160, a plurality of the imaging devices 130, a plurality of acoustic sensors 180, and the position sensor 190. The speakers 160 may be located in various locations, such as coupled to the band 175 (as shown), coupled to front rigid body 115, or may be configured to be inserted within the ear canal of a user.

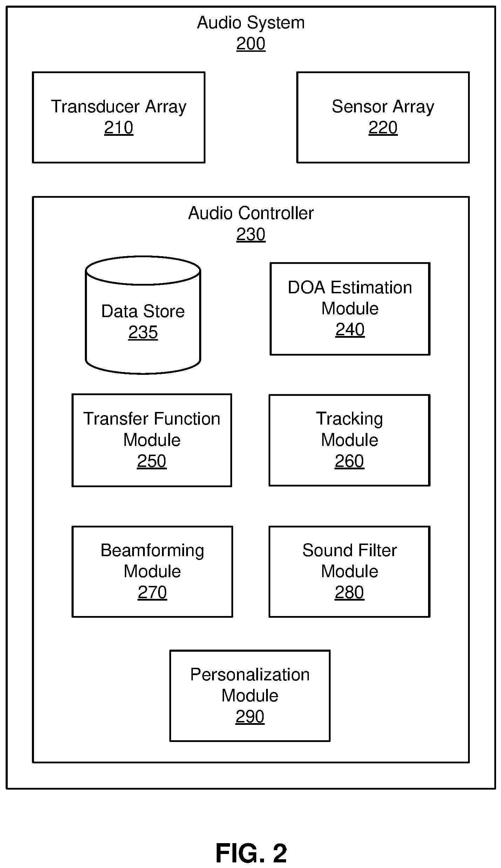

FIG. 2 is a block diagram of an audio system 200. The audio system in FIG. 1A or FIG. 1B may be an example of the audio system 200. The audio system 200 generates one or more acoustic transfer functions for a user. The audio system 200 may then use the one or more acoustic transfer functions to generate audio content for the user. In the example of FIG. 2, the audio system 200 includes a transducer array 210, a sensor array 220, and an audio controller 230. Some examples of the audio system 200 have different components than those described here. Similarly, in some cases, functions can be distributed among the components in a different manner than is described here.

The transducer array 210 is configured to present audio content. The transducer array 210 includes a plurality of transducers. A transducer is a device that provides audio content. A transducer may be, e.g., a speaker (e.g., the speaker 160), a tissue transducer (e.g., the tissue transducer 170), some other device that provides audio content, or some combination thereof. A tissue transducer may be configured to function as a bone conduction transducer or a cartilage conduction transducer. The transducer array 210 may present audio content via air conduction (e.g., via one or more speakers), via bone conduction (via one or more bone conduction transducer), via cartilage conduction audio system (via one or more cartilage conduction transducers), or some combination thereof. In some examples, the transducer array 210 may include one or more transducers to cover different parts of a frequency range. For example, a piezoelectric transducer may be used to cover a first part of a frequency range and a moving coil transducer may be used to cover a second part of a frequency range.

The bone conduction transducers generate acoustic pressure waves by vibrating bone/tissue in the user's head. A bone conduction transducer may be coupled to a portion of a headset, and may be configured to be behind the auricle coupled to a portion of the user's skull. The bone conduction transducer receives vibration instructions from the audio controller 230, and vibrates a portion of the user's skull based on the received instructions. The vibrations from the bone conduction transducer generate a tissue-borne acoustic pressure wave that propagates toward the user's cochlea, bypassing the eardrum.

The cartilage conduction transducers generate acoustic pressure waves by vibrating one or more portions of the auricular cartilage of the ears of the user. A cartilage conduction transducer may be coupled to a portion of a headset, and may be configured to be coupled to one or more portions of the auricular cartilage of the ear. For example, the cartilage conduction transducer may couple to the back of an auricle of the ear of the user. The cartilage conduction transducer may be located anywhere along the auricular cartilage around the outer ear (e.g., the pinna, the tragus, some other portion of the auricular cartilage, or some combination thereof). Vibrating the one or more portions of auricular cartilage may generate: airborne acoustic pressure waves outside the ear canal; tissue born acoustic pressure waves that cause some portions of the ear canal to vibrate thereby generating an airborne acoustic pressure wave within the ear canal; or some combination thereof. The generated airborne acoustic pressure waves propagate down the ear canal toward the ear drum.

The transducer array 210 generates audio content in accordance with instructions from the audio controller 230. In some examples, the audio content is spatialized. Spatialized audio content is audio content that appears to originate from a particular direction and/or target region (e.g., an object in the local area and/or a virtual object). For example, spatialized audio content can make it appear that sound is originating from a virtual singer across a room from a user of the audio system 200. The transducer array 210 may be coupled to a wearable device (e.g., the headset 100 or the headset 105). In alternate examples, the transducer array 210 may be a plurality of speakers that are separate from the wearable device (e.g., coupled to an external console).

The sensor array 220 detects sounds within a local area surrounding the sensor array 220. The sensor array 220 may include a plurality of acoustic sensors that each detect air pressure variations of a sound wave and convert the detected sounds into an electronic format (analog or digital). The plurality of acoustic sensors may be positioned on a headset (e.g., headset 100 and/or the headset 105), on a user (e.g., in an ear canal of the user), on a neckband, or some combination thereof. An acoustic sensor may be, e.g., a microphone, a vibration sensor, an accelerometer, or any combination thereof. In some examples, the sensor array 220 is configured to monitor the audio content generated by the transducer array 210 using at least some of the plurality of acoustic sensors. Increasing the number of sensors may improve the accuracy of information (e.g., directionality) describing a sound field produced by the transducer array 210 and/or sound from the local area.

The audio controller 230 controls operation of the audio system 200. In the example of FIG. 2, the audio controller 230 includes a data store 235, a DOA estimation module 240, a transfer function module 250, a tracking module 260, a beamforming module 270, and a sound filter module 280. The audio controller 230 may be located inside a headset, in some examples. Some examples of the audio controller 230 have different components than those described here. Similarly, functions can be distributed among the components in different manners than described here. For example, some functions of the controller may be performed external to the headset. The user may opt in to allow the audio controller 230 to transmit data captured by the headset to systems external to the headset, and the user may select privacy settings controlling access to any such data.

The data store 235 stores data for use by the audio system 200. Data in the data store 235 may include sounds recorded in the local area of the audio system 200, audio content, head-related transfer functions (HRTFs), transfer functions for one or more sensors, array transfer functions (ATFs) for one or more of the acoustic sensors, sound source locations, virtual model of local area, direction of arrival estimates, sound filters, and other data relevant for use by the audio system 200, or any combination thereof.

The user may opt-in to allow the data store 235 to record data captured by the audio system 200. In some examples, the audio system 200 may employ always on recording, in which the audio system 200 records all sounds captured by the audio system 200 in order to improve the experience for the user. The user may opt in or opt out to allow or prevent the audio system 200 from recording, storing, or transmitting the recorded data to other entities.

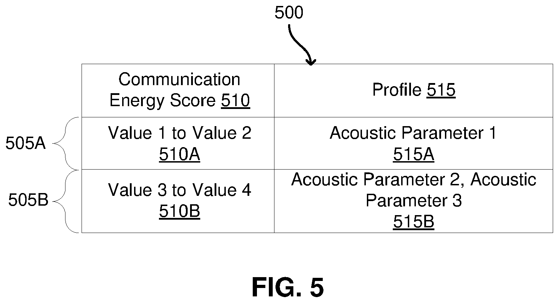

In various examples, the data store 235 includes associations between communication energy scores and profiles, where a profile associated with a communication energy score includes one or more acoustic parameters. As further described below in conjunction with FIG. 3, the communication energy score is based on biometric data of a user, so the profile associated with the communication energy score specifies acoustic parameters corresponding to a combination of biometric data for the user. The acoustic parameters in a profile identify one or more modifications to audio by the audio system 200 when presenting audio to a user when biometric data of the user corresponds to a communication energy score associated with the profile. Example acoustic parameters included in a profile include noise cancellation parameters, beamforming parameters, a frequency response, an amount of gain for audio, a compression ratio for the audio, a time constant for the audio. In some examples, the data store 235 includes a database including entries that each have a communication energy score or a range of communication energy scores and a corresponding profile, such as the example further described below in conjunction with FIG. 5. The database may be associated with a user, allowing the database to include user-specific profiles.

The DOA estimation module 240 is configured to localize sound sources in the local area based in part on information from the sensor array 220. Localization is a process of determining where sound sources are located relative to the user of the audio system 200. The DOA estimation module 240 performs a DOA analysis to localize one or more sound sources within the local area. The DOA analysis may include analyzing the intensity, spectra, and/or arrival time of each sound at the sensor array 220 to determine the direction from which the sounds originated. In some cases, the DOA analysis may include any suitable algorithm for analyzing a surrounding acoustic environment in which the audio system 200 is located.

For example, the DOA analysis may be designed to receive input signals from the sensor array 220 and apply digital signal processing algorithms to the input signals to estimate a direction of arrival. These algorithms may include, for example, delay and sum algorithms where the input signal is sampled, and the resulting weighted and delayed versions of the sampled signal are averaged together to determine a DOA. A least mean squared (LMS) algorithm may also be implemented to create an adaptive filter. This adaptive filter may then be used to identify differences in signal intensity, for example, or differences in time of arrival. These differences may then be used to estimate the DOA. In another example, the DOA may be determined by converting the input signals into the frequency domain and selecting specific bins within the time-frequency (TF) domain to process. Each selected TF bin may be processed to determine whether that bin includes a portion of the audio spectrum with a direct path audio signal. Those bins having a portion of the direct-path signal may then be analyzed to identify the angle at which the sensor array 220 received the direct-path audio signal. The determined angle may then be used to identify the DOA for the received input signal. Other algorithms not listed above may also be used alone or in combination with the above algorithms to determine DOA.

In some examples, the DOA estimation module 240 may also determine the DOA with respect to an absolute position of the audio system 200 within the local area. The position of the sensor array 220 may be received from an external system (e.g., some other component of a headset, an artificial reality console, a mapping server, a position sensor (e.g., the position sensor 190), etc.). The external system may create a virtual model of the local area, in which the local area and the position of the audio system 200 are mapped. The received position information may include a location and/or an orientation of some or all of the audio system 200 (e.g., of the sensor array 220). The DOA estimation module 240 may update the estimated DOA based on the received position information.

The transfer function module 250 is configured to generate one or more acoustic transfer functions. Generally, a transfer function is a mathematical function giving a corresponding output value for each possible input value. Based on parameters of the detected sounds, the transfer function module 250 generates one or more acoustic transfer functions associated with the audio system. The acoustic transfer functions may be array transfer functions (ATFs), head-related transfer functions (HRTFs), other types of acoustic transfer functions, or some combination thereof. An ATF characterizes how the microphone receives a sound from a point in space.

An ATF includes a number of transfer functions that characterize a relationship between the sound source and the corresponding sound received by the acoustic sensors in the sensor array 220. Accordingly, for a sound source there is a corresponding transfer function for each of the acoustic sensors in the sensor array 220. And collectively the set of transfer functions is referred to as an ATF. Accordingly, for each sound source there is a corresponding ATF. Note that the sound source may be, e.g., someone or something generating sound in the local area, the user, or one or more transducers of the transducer array 210. The ATF for a particular sound source location relative to the sensor array 220 may differ from user to user due to a person's anatomy (e.g., ear shape, shoulders, etc.) that affects the sound as it travels to the person's ears. Accordingly, the ATFs of the sensor array 220 are personalized for each user of the audio system 200.

In some examples, the transfer function module 250 determines one or more HRTFs for a user of the audio system 200. The HRTF characterizes how an ear receives a sound from a point in space. The HRTF for a particular source location relative to a person is unique to each ear of the person (and is unique to the person) due to the person's anatomy (e.g., ear shape, shoulders, etc.) that affects the sound as it travels to the person's ears. In some examples, the transfer function module 250 may determine HRTFs for the user using a calibration process. In some examples, the transfer function module 250 may provide information about the user to a remote system. The user may adjust privacy settings to allow or prevent the transfer function module 250 from providing the information about the user to any remote systems. The remote system determines a set of HRTFs that are customized to the user using, e.g., machine learning, and provides the customized set of HRTFs to the audio system 200.

The tracking module 260 is configured to track locations of one or more sound sources. The tracking module 260 may compare current DOA estimates and compare them with a stored history of previous DOA estimates. In some examples, the audio system 200 may recalculate DOA estimates on a periodic schedule, such as once per second, or once per millisecond. The tracking module may compare the current DOA estimates with previous DOA estimates, and in response to a change in a DOA estimate for a sound source, the tracking module 260 may determine that the sound source moved. In some examples, the tracking module 260 may detect a change in location based on visual information received from the headset or some other external source. The tracking module 260 may track the movement of one or more sound sources over time. The tracking module 260 may store values for a number of sound sources and a location of each sound source at each point in time. In response to a change in a value of the number or locations of the sound sources, the tracking module 260 may determine that a sound source moved. The tracking module 260 may calculate an estimate of the localization variance. The localization variance may be used as a confidence level for each determination of a change in movement.

The beamforming module 270 is configured to process one or more ATFs to selectively emphasize sounds from sound sources within a certain area while de-emphasizing sounds from other areas. In analyzing sounds detected by the sensor array 220, the beamforming module 270 may combine information from different acoustic sensors to emphasize sound associated from a particular region of the local area while deemphasizing sound that is from outside of the region. The beamforming module 270 may isolate an audio signal associated with sound from a particular sound source from other sound sources in the local area based on, e.g., different DOA estimates from the DOA estimation module 240 and the tracking module 260. The beamforming module 270 may thus selectively analyze discrete sound sources in the local area. In some examples, the beamforming module 270 may enhance a signal from a sound source. For example, the beamforming module 270 may apply sound filters which eliminate signals above, below, or between certain frequencies. Signal enhancement acts to enhance sounds associated with a given identified sound source relative to other sounds detected by the sensor array 220.

The sound filter module 280 determines sound filters for the transducer array 210. In some examples, the sound filters cause the audio content to be spatialized, such that the audio content appears to originate from a target region. The sound filter module 280 may use HRTFs and/or acoustic parameters to generate the sound filters. The acoustic parameters describe acoustic properties of the local area. The acoustic parameters may include, e.g., a reverberation time, a reverberation level, a room impulse response, etc. In some examples, the sound filter module 280 calculates one or more of the acoustic parameters. In some examples, the sound filter module 280 requests the acoustic parameters from a mapping server (e.g., as described below with regard to FIG. 7).

The sound filter module 280 provides the sound filters to the transducer array 210. In some examples, the sound filters may cause positive or negative amplification of sounds as a function of frequency.

Additionally, the audio system 200 includes a personalization module 290 that receives biometric data from a user of the audio system 200 and determines audio parameters for presenting audio to the user based on the biometric data. For example, the personalization module 290 receives audio captured by the sensor array 220 and extracts a portion of the audio from the audio corresponding to the user's voice. The personalization module 290 extracts one or more characteristics of the audio corresponding to the user's voice as biometric data for the user and determines a communication energy score of the user from the biometric data. Example characteristics of the audio corresponding to the user's voice include a volume of the user's voice, a pitch of the user's voice, a tone of the user's voice, and other characteristics of the user's voice.

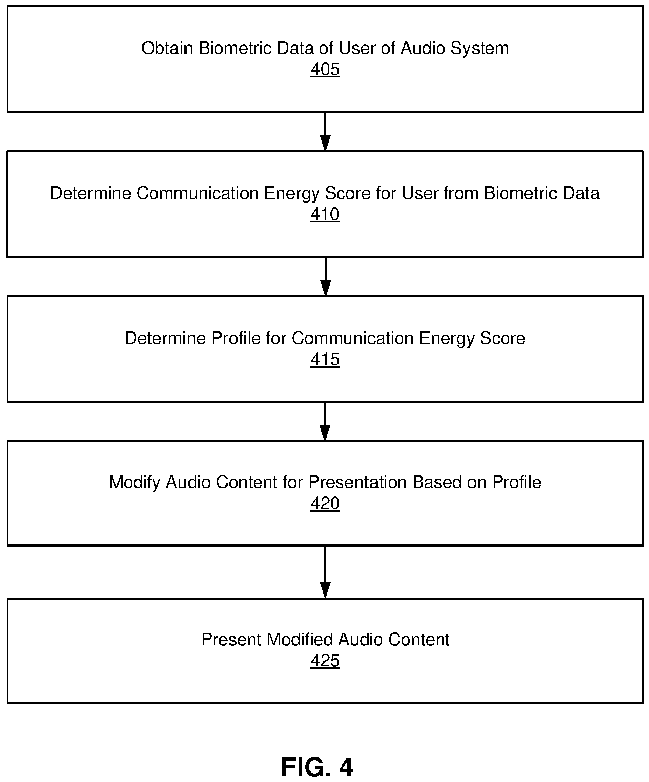

In some examples, the biometric data for the user include physiological data of the user captured by one or more other sensors, which may be included in the audio system 200 or may be included in other devices that are communicatively coupled to the audio system 200. For example, physiological data included in the biometric data for the user includes one or more of a heart rate, a blood pressure, a heart rate variability, an electrocardiogram (ECG) of the user, a temperature, a respiratory rate, an oxygen saturation level, or other data of user captured by one or more physiological sensors communicatively coupled to the audio system 200. The personalization module 290 determines a communication energy score of the user from the biometric data of the user by applying a trained model to the biometric data of the user, as further described below in conjunction with FIG. 4. However, in other examples, the personalization module 290 determines the communication energy score of the user from biometric data including one of the characteristics of the user's voice or the biometric data.

FIG. 3 is an example system environment 300 including the audio system 200 coupled to one or more additional physiological sensors. The audio system 200 includes a sensor array 220 including one or more microphones configured to capture audio from a local area surrounding the audio system 200, as further described above in conjunction with FIG. 2. The sensor array 220 is coupled to a personalization module 290 of the audio system 200, which extracts one or more characteristics of a user from audio captured by the sensor array 220 as biometric data of the user, as further described below in conjunction with FIG. 4.

In the example shown by FIG. 3, the personalization module 290 is also communicatively coupled to one or more physiological sensors 305A, 305B (also referred to individually and collectively using reference number 305). Examples of physiological sensors 305 include a heart rate monitor, a blood pressure monitor, electrodes contacting a user and recording electrical signals, a thermometer, a pulse oximeter, or other sensors that capture data describing physiological data of a user. A physiological sensor 305 may capture multiple types of physiological data from the user or different physiological sensors 305 capture different types of physiological data. As shown in FIG. 3, physiological sensor 305A is communicatively coupled to the personalization module 290 of the audio system 200. For example, physiological sensor 305A exchanges data with the personalization module 290 through a wireless communication channel, through a wired communication channel, or through a combination of a wireless communication channel and a wired communication channel. In various examples, physiological sensor 305A is included in a device that also includes the audio system 200. For example, sensor 305A and the audio system 200 are included in a headset 100 or in a headset 105, as further described above in conjunction with FIGS. 1A and 1B.

In some examples, physiological sensor 305B is included in a different device 310 than the device including the audio system 200, with the different device communicatively coupled to the personalization module 290. For example, the audio system 200 is included in a frame 110 of a headset 100, while physiological sensor 305B is included in a different device 310, such as a smart watch, a mobile device, or another wearable device. A user authorizes the device 310 to share data from physiological sensor 305B with the personalization module 290, allowing the personalization module 290 to leverage physiological sensors 305 included in one or more other devices 310 to obtain additional physiological data of the user for the biometric data of the user. Physiological sensor 305B communicates with the personalization module 290 through a wireless communication channel in various examples, while in other examples the personalization module 290 communicates with physiological sensor 305B using a wired communication channel or another type of communication channel.

Referring back to FIG. 2, based on the communication energy score determined for the user, the personalization module 290 modifies one or more acoustic parameters applied by the audio system 200 when presenting audio to the user, as further described below in conjunction with FIG. 4. In some examples, the personalization module 290 determines a profile corresponding to a communication energy score for the user, where the profile includes one or more acoustic parameters applied to audio presented to the user. For example, the data store 235 includes associations between ranges of communication energy scores and profiles and selects a profile associated with a range of communication energy scores including the communication energy score for the user. The personalization module 290 applies acoustic parameters from the selected profile to audio presented to the user, as further described below in conjunction with FIG. 4.

FIG. 4 is a flowchart of a method for modifying presentation of audio content for a user based on biometric data of the user. The process shown in FIG. 4 may be performed by components of an audio system (e.g., audio system 200). Other entities may perform some or all of the steps in FIG. 4 in other examples. Examples may include different and/or additional steps, or perform the steps in different orders.

An audio system 200, such as the audio system further described above in conjunction with FIG. 2, obtains 405 biometric data of a user of the audio system 200. The audio system 200 may be included in a headset 100 or in another type of wearable or portable device in various examples. In various examples, the audio system 200 receives audio from a sensor array 220 that captures audio from the local area surrounding the audio system 200. The audio system 200 applies one or more audio processes to extract audio corresponding to the user's voice from the audio captured by the sensor array 220. The audio system 200 determines one or more characteristics of the audio corresponding to the user's voice that comprise biometric data for the user. Example characteristics of the audio corresponding to the user's voice include a volume of the user's voice, a pitch of the user's voice, a tone of the user's voice, and other characteristics of the user's voice. This allows the biometric data of the user to account for how the user is talking to determine information about the user.

In various examples, the audio system 200 obtains 405 data from one or more additional sensors, such as physiological sensors configured to capture physiological data of the user. Examples of physiological data captured by a physiological sensor include: a heart rate, a blood pressure, an electrocardiogram, a temperature, an oxygen saturation, a respiratory rate, a temperature, or other data describing the user's physiology. One or more physiological sensors may be included in a device including the audio system 200, with the one or more physiological sensors communicating captured physiological data to the audio system 200. For example, a headset 100 includes one or more physiological sensors and the audio system 200. Alternatively or additionally, one or more physiological sensors are included in one or more devices that are different from the device including the audio system 200. For example, the audio system 200 is included in a headset 100, and one or more other wearable devices include physiological sensors that the user has authorized to share captured physiological data with the audio system 200. In other examples, one or more physiological sensors are included in the device including the audio system 200, while one or more different devices include one or more physiological sensors that communicate with the audio system 200. Physiological data from one or more physical sensors is combined with the characteristics of the user's voice from the sensor array 220 to form the biometric data of the user in some examples. Alternatively, the biometric data of the user comprises captured physiological data of the user without characteristics of the user's voice from captured audio. While in other examples, the biometric data of the user includes characteristics of the user's voice from captured audio without other physiological data.

Further, in some examples, the biometric data of the user includes interactions by the user with the audio system 200. For example, biometric data may include information describing inputs that the audio system 200 receives from the user. Example inputs included in the biometric data include inputs that modify audio presented by the audio system, inputs that modify a volume of audio presented by the audio system, or other inputs that modify audio presentation. For example, the biometric data for a user includes an input where the user changed audio that was presented along with an indication of one or more characteristics of the originally presented audio and one or more characteristics of alternative audio presented after receiving the input from the user.

From the obtained biometric data, the audio system 200 determines 410 a communication energy score for the user. In various examples, the audio system 200 determines 410 the communication energy score by applying a trained model to the biometric data of the user. The audio system 200 trains the model through application to labeled training examples in various examples. For example, each training example includes biometric data, with a label applied to each training example identifying a communication energy score corresponding to the biometric data. The audio system 200, such as the audio controller 230, applies the classification model to each training example of a set. The audio system 200 compares an output of the model, which is a predicted communication energy score, when applied to a training example to the label applied to the training example. The audio system 200 scores the output from the classification model, which is the predicted communication energy score, using a loss function that generates a score for the output of the model based on a comparison of the predicted communication energy score output by the model to the label applied to the training example. Example loss functions include a mean square error function, a mean absolute error, a hinge loss function, and a cross entropy loss function. The audio system 200 updates a set of parameters for the model using backpropagation based on the score generated by the loss function. For example, the audio system 200 applies gradient descent to update a set of parameters comprising the model. In some examples, the audio system 200 applies the model to training examples and updates parameters of the classification model until the loss function used by the audio system 200 satisfies one or more conditions. As further described above, the biometric data for the user includes characteristics of audio corresponding to the user's voice and may include other physiological data of the user captured from one or more sensors and obtained 405 by the audio system 200, so the communication energy score is based on data describing a condition of the user. In various examples, the audio system 200 trains the model for a particular user, allowing the model to be personalized for the particular user of the audio system 200.

As the communication energy score determined 410 for the user is based on biometric data of the user, the communication energy score provides a measure of the user's reaction to audio presented by the audio system 200 and to the local area surrounding the audio system 200. For example, a value of the communication energy score indicates the user is excited, while a different value of the communication energy score indicates the user is tired. Another value of the communication energy score may indicate the user is active, with an alternative value of the communication energy score indicating the user is relaxed. Hence, the communication energy score leverages obtained biometric data from the user to provide an indication about a user's current condition, such as a mood of the user or an activity in which the user is engaging. As the user may have different preferences for presentation of audio for different conditions, the communication energy score provides an indication of the condition of the user that may be used to automatically modify presentation of audio by the audio system 200 to account for the user's condition.

As the communication energy score provides information about the condition of the user, to account for the condition of the user when presenting audio, the audio system 200 determines 415 acoustic parameters associated with the determined communication energy score. In various examples, the audio system 200 stores a profile with each of one or more communication energy scores and retrieves the stored profile associated with the determined communication energy score. FIG. 5 shows an example database 500 associating profiles with communication energy scores. The database 500 shown in FIG. 5 includes entries 505A, 505B (also referred to individually and collectively using reference number 505) that each include a range 510A, 510B of communication energy scores (also referred to individually and collectively using reference number 510) and a profile 515A, 515B (also referred to individually and collectively using reference number 515). The profile 515 associated with a range of communication energy scores 510 includes one or more acoustic parameters describing presentation of audio content to a user for communication energy scores 510 within the range associated with the profile 515. Example acoustic parameters include noise suppression parameters, beamforming parameters, types of audio to be presented, a volume for audio presentation, a room impulse response for spatializing audio, or other parameters specifying audio to be presented or user perception of presented audio. Acoustic parameters included in a profile 515 may be received by the audio system 200 from a user and stored in association with the user. The user may provide inputs specifying the acoustic parameters for a profile 515 through an interface provided by a device, such as a headset 100. In some examples, the audio system 200 provides default values for various acoustic parameters to the user, and inputs received from the user adjust the default values. The database 500 is stored in association with an identifier of a user in various examples, allowing the audio system 200 to maintain databases 500 for different users, allowing different users to specify individualized profiles 515 for ranges of communication energy scores 510. While FIG. 5 shows an example where each entry 505A, 505B includes a range of communication energy scores 510, in some examples, one or more entries 505 include a specific communication energy score and a corresponding profile 515 for the specific communication energy score. In various examples, the database 500 is stored in the data store 235 of the audio system 200, while in other examples, the database is stored external to the audio system 200, such as in a mapping sever 725, as further described below in conjunction with FIG. 7.

In various examples, a profile 515 for a range of communication energy scores 510 includes one or more preferences of the user for audio. For example, a profile 515 includes a volume for audio content, a type of audio content, or other user-specific modifications to audio content. In some examples, the profile 515 includes a head-related transfer function for a user as a preference of the user, allowing the profile 515 to account for a specific user to whom audio is presented. In other examples, the head-related transfer function for the user is stored in the data store 235 in association with the user and is retrieved along with a profile 515 determined for the location determined for the local area surrounding the audio system 200.

Referring back to FIG. 4, in various examples, the audio system 200 determines 415 the profile for the determined communication energy score by identifying a stored profile associated with a range of communication energy scores including the determined communication energy score. In other examples, the audio system 200 determines 415 the profile as a stored profile associated with a communication energy score matching the determined communication energy score. As further described above, the profile includes one or more acoustic parameters for audio content to be presented to a user while the communication energy score determined 410 for the user is associated with the profile. This allows audio presented by the audio system 200 to be presented subject to the user's preferences specified by the acoustic parameters of the profile while the user has the determined communication energy score. This allows the audio system 200 to automatically modify how audio content is presented to the user based on biometric data obtained 405 for the user without receiving input from the user specifying preferences of the user.

In some examples, one or more acoustic parameters in a profile describe noise cancellation applied by the audio system 200. For example, an acoustic parameter specifies one or more frequencies of audio (e.g., a frequency range) that are suppressed or cancelled in audio presented by the audio system 200. As another example, an acoustic parameter specifies an amount by which audio having a specific frequency range is suppressed, allowing the acoustic parameter to specify an amount of attenuation for certain audio. In some examples, different acoustic parameters specify different frequency ranges and with corresponding amounts of attenuation, allowing different frequencies to be attenuated by different amounts. Such acoustic parameters allow a profile to identify how frequencies of audio are attenuated while the user has a particular communication energy score. Hence, the profile includes preferences for the user for how audio is presented by the audio system 200 while the user has biometric data corresponding to one or more communication energy scores. In some examples, the profile includes a head related transfer function for the user to account for physical properties of the user when audio is presented to the user (e.g., whether the user has difficulty hearing audio from a particular direction).

As another example, one or more acoustic parameters in a profile identify one or more frequency ranges to emphasize, so the audio system 200 increases an amplitude of audio frequencies within an identified frequency range. Alternatively, the audio system 200 decreases an amplitude of audio frequencies in ranges other than the identified frequency range. In some examples, different amplitudes are associated with different frequency ranges, allowing different levels of emphasis to be applied to different frequency ranges. In some examples, one or more acoustic parameters identify a source of audio or characteristics of a source of audio, causing the audio system 200 to emphasize audio from the identified source in the local area or from a source in the local area having the identified characteristics relative to audio from different sources in the local area while the audio system 200 is in the location. For example, an audio parameter identifies one or more regions of the local area, and the audio system 200 emphasizes audio from an identified region of the local area relative to audio from other regions of the local area. Such audio parameters allow a user to customize how audio within the local area is perceived by the user, allowing the audio to appear to be presented within a location having audio transmission characteristics described by the location profile. Other example acoustic parameters included in a location profile include a frequency response, an amount of gain for one or more portions of the audio, a compression ratio for the audio, a time constant for the audio, or other values affecting presentation of audio to a user.

In other examples, one or more acoustic parameters specify characteristics of audio presented to the user while the audio system 200 is in the location. For example, an acoustic parameter specifies a source of the audio presented to the user. As an example, an acoustic parameter specifies that audio presented to the user is audio from the local area captured by a sensor array 220 of the audio system 200. In another example, an acoustic parameter specifies that audio presented to the user is obtained from a storage device or other device coupled to the audio system 200. In examples where an acoustic parameter specifies audio presented to the user is obtained from a storage device or other device, one or more additional acoustic parameters identify characteristics of audio to retrieve and to present to the user. Example characteristics of audio to retrieve include a genre of audio, a type of audio, an artist associated with the audio, a specific audio file or playlist, or other information capable of identifying specific audio for presentation. One or more acoustic parameters may specify a volume with which audio is presented to the user by the audio system 200, a playback speed of audio presented to the user, or other characteristics specifying how audio is presented by the audio system 200. Such acoustic parameters allow a profile to tailor a type of audio presented to the user based on biometric data of the user when the audio is presented. For example, a communication energy score is associated with a profile identifying audio data that is up-tempo for presentation while biometric data of the user indicates the user is active, while another communication energy score is associated with a different profile identifying alternative audio data to present to the user when a communication energy score of the user indicates the user is calm or is tired.

Based on the determined profile, the audio system 200 modifies 420 audio content for presentation by the audio system 200 based on the one or more acoustic parameters included in the determined profile and presents 425 the modified audio to the user. For example, the audio system 200 modifies 420 audio based on acoustic parameters in the determined profile and presents 425 the modified audio to the user through one or more transducers in a transducer array 210 included in the audio system 200. As an example, the audio controller 230 of the audio system 200 applies one or more noise cancellation processes to modify 420 audio by removing portions of the audio with characteristics specified by one or more acoustic parameters included in the determined profile; the audio system 200 subsequently presents 425 audio without the removed portions to the user via the transducer array 210. As another example, the audio controller 230 of the audio system 200 processes one or more array transfer functions (ATFs) to selectively emphasize audio from audio sources within the local area while de-emphasizing other audio based on one or more acoustic parameters included in the determined profile. After application of the one or more ATFs, the audio system 200 presents 425 the modified audio, such as via one or more transducers of the transducer array 210. In another example, the audio system 200 retrieves audio based on one or more audio parameters of the profile and presents 425 the retrieved audio to a user, such as through the transducer array 210. Alternatively, the sensor array 220 of the audio system 200 captures audio from the local area, and the audio controller 230 modifies 420 the captured audio based on the one or more audio parameters of the location profile. For example, the audio system 200 replaces a portion of the captured audio having specific characteristics (e.g., volume, frequency) with alternative audio. The audio system 200 presents 425 the modified audio captured from the local area, such as via the transducer array 210, allowing the audio system 200 to modify audio captured from the local area based on the location parameter.

In some examples, the audio controller 230 modifies 420 audio presented to the user by selecting alternative audio for presentation based on the communication energy score of the user or based on a change in the communication energy score of the user. For example, in response to the communication energy score of the user changing from a value to an alternative value that has at least a threshold difference from the value within a threshold amount of time of audio being presented to the user, the audio system selects and presents 425 alternative audio to the user. In various examples, the audio controller 230 maintains transitions between communication energy scores causing replacement of audio with alternative audio. For example, a transition from a communication energy score having a value corresponding to the user at rest to a communication energy score having a different value corresponding to the user being excited causes the audio controller 230 to replace audio presented to the user with alternative audio. For example, the audio system 200 maintains a threshold difference between communication energy scores determined 410 at consecutive times, and replaces at least a portion of audio presented to the user in response to a difference between consecutive communication energy scores equaling or exceeding the threshold difference. In various examples, the audio system 200 stores associations between different audio and different communication energy scores or ranges of communication energy scores, allowing the audio controller 230 to select alternative audio associated with a desired communication energy score or associated with a particular communication energy score that replaces audio. For example, the audio controller 230 modifies 420 audio by replacing a portion of the audio with alternative audio that is associated with a range of communication energy scores including a communication energy score for the user from a prior time interval (e.g., from a threshold amount of time before a change in the communication energy score for the user occurred). In various examples, the audio system 200 replaces a portion of the audio having one or more characteristics (e.g., a threshold volume, a specific frequency range) with alternative audio based on a difference between consecutive communication energy scores equaling or exceeding the threshold difference. Such examples allow the audio system 200 to selectively replace portions of the audio with alternative audio based on changes in the communication energy score for the user.

Additionally or alternatively, the audio system 200 may account for changes in the communication energy score for the user over time when modifying 420 audio for presentation to a user. For example, the audio system 200 determines an average communication energy score for the user, allowing the average communication energy score to reflect average values for biometric data of the user. The audio system 200 also determines an extended communication energy score for the user during a particular time interval (e.g., during a day, during a 12 hour interval), with the extended communication energy score determined from communication energy scores determined 410 during the particular time interval (e.g., an average of communication energy scores determined 410 during the particular time interval). The audio system 200 compares the extended communication energy score for the user to the average communication energy score. In response to a difference between the extended communication energy score and the average communication energy score equaling or exceeding a threshold, the audio system 200 may prompt the user to select from one or more sets of acoustic parameters to modify 420 audio presentation to the user so the difference between the average communication energy score and the average communication energy score is decreased (or is increased). The sets of acoustic parameters identified to the user may be profiles associated with ranges of communication energy scores including the average communication energy score. In various examples, the audio system 200 presents the sets of acoustic parameters via a display element 120 of a headset 100 or through the transducer array 210 of the audio system 200.

In various examples, the audio system 200 continuously obtains 405 biometric data of the user and continuously determines 410 the communication energy score of the user. This allows the audio system 200 to dynamically determine 410 the communication energy score of the user to dynamically modify 420 presentation of audio to the user based on changes to the communication energy score of the user. In response to changes in the obtained biometric data, the audio system 200 determines 410 an updated communication energy score based on the changed biometric data and determines 415 a different profile corresponding to the updated communication energy score. This allows the audio system 200 to automatically update how audio is modified 420 by automatically updating the profile in response to changes in biometric data of the user. Such automatic adjustment of audio modification allows the audio system 200 to differently present audio to a user based on changing physiological data of the user without the user manually selecting or providing acoustic parameters for audio presentation based on changes to the user's biometric data.

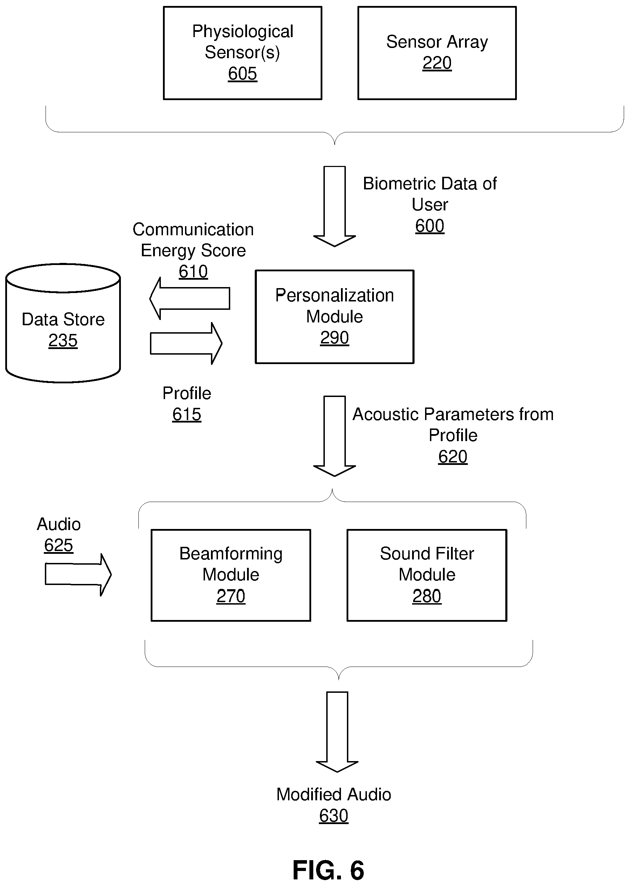

FIG. 6 is a process flow diagram of a method for modifying presentation of audio content for a user based on biometric data of the user. As shown in FIG. 6, an audio system 200 includes a personalization module 290 that receives biometric data 600 of a user. The biometric data 600 of the user is obtained from one or more components or devices. For example, a sensor array 220 of the audio system 200 captures audio from which the user's voice is extracted. Characteristics of the user's voice are determined and comprise biometric data 600 of the user in various examples. Alternatively or additionally, the audio system 200 receives physiological data of the user from one or more physiological sensors 605, as further described above in conjunction with FIGS. 3 and 4. The biometric data 600 of the user may include characteristics of the user's voice, physiological data of the user, or a combination of characteristics of the user's voice and physiological data of the user in various examples.

Based on the obtained biometric data 600 of the user, the personalization module 290 of the audio system 200 determines a communication energy score 610 of the user. As further described above in conjunction with FIG. 4, the personalization module 290 applies a trained model to the biometric data 600 of the user to determine the communication energy score 610. In various examples, the personalization module 290 continuously determines the communication energy score 610, allowing the personalization module 290 to update the communication energy score 610 to reflect changes in biometric data 600 of the user over time.

From the communication energy score 610 of the user based on the biometric data 600 of the user, the personalization module 290 determines a profile 615. In various examples, the data store 235 maintains associations between profiles and different communication energy scores 610, so the personalization module 290 retrieves the profile 615 associated with the determined communication energy score 610. As further described above in conjunction with FIGS. 4 and 5, each profile 615 includes one or more acoustic parameters to be applied by the audio system 200 when presenting audio, allowing modification of the audio based on the acoustic parameters in the profile 615. Example acoustic parameters included in a profile 615 include noise cancellation parameters, beamforming parameters, a frequency response, an amount of gain for audio, a compression ratio for the audio, a time constant for the audio. In various examples, the profile 615 for a communication energy score 610 includes one or more preferences specified by a user or determined for the user, allowing the profile to account for user-specified preferences for audio presentation for particular biometric data for the user.

The personalization module 290 provides acoustic parameters 620 from the profile 615 to one or more of the beamforming module 270 and the sound filter module 280, which update one or more processes applied to audio based on the acoustic parameters 620. While FIG. 6 shows the personalization module 290 providing acoustic parameters 620 to the beamforming module 270 or to the sound filter module 280, in other examples, the acoustic parameters 620 are provided to different or additional components capable of modifying audio. For example, the acoustic parameters 620 are used to retrieve audio for presentation that has characteristics specified by the acoustic parameters 620. Subsequently, when the audio system 200 presents audio 625 to the user, the beamforming module 270 or the sound filter module 280 (or one or more other components) modify the audio 625 based on the acoustic parameters 620 from the profile 615, and the modified audio 630 output by the beamforming module 270 or the sound filter module 280 (or by one or more other components) is presented to the user via a transducer array 210 or other device. For example, the audio 625 is audio captured by the sensor array 220, so the acoustic parameters 620 from the profile 615 are used to modify audio captured from the local area. As another example, the audio 625 is received from the data store 235 or from another source, and the audio system 200 modifies the audio 625 based on the acoustic parameters 620 from the profile 615 before presentation to the user, as further described above in conjunction with FIG. 4.

FIG. 7 is a system 700 that includes a headset 705. In some examples, the headset 705 may be the headset 100 of FIG. 1A or the headset 105 of FIG. 1B. The system 700 may operate in an artificial reality environment (e.g., a virtual reality environment, an augmented reality environment, a mixed reality environment, or some combination thereof). The system 700 shown by FIG. 7 includes the headset 705, an input/output (I/O) interface 710 that is coupled to a console 715, the network 720, and the mapping server 725. While FIG. 7 shows an example system 700 including one headset 705 and one I/O interface 710, in other examples any number of these components may be included in the system 700. For example, there may be multiple headsets each having an associated I/O interface 710, with each headset and I/O interface 710 communicating with the console 715. In alternative configurations, different and/or additional components may be included in the system 700. Additionally, functionality described in conjunction with one or more of the components shown in FIG. 7 may be distributed among the components in a different manner than described in conjunction with FIG. 7 in some examples. For example, some or all of the functionality of the console 715 may be provided by the headset 705.

The headset 705 includes the display assembly 730, an optics block 735, one or more position sensors 740, and the DCA 745. Some examples of headset 705 have different components than those described in conjunction with FIG. 7. Additionally, the functionality provided by various components described in conjunction with FIG. 7 may be differently distributed among the components of the headset 705 in other examples, or be captured in separate assemblies remote from the headset 705.

The display assembly 730 displays content to the user in accordance with data received from the console 715. The display assembly 730 displays the content using one or more display elements (e.g., the display elements 120). A display element may be, e.g., an electronic display. In various examples, the display assembly 730 comprises a single display element or multiple display elements (e.g., a display for each eye of a user). Examples of an electronic display include: a liquid crystal display (LCD), an organic light emitting diode (OLED) display, an active-matrix organic light-emitting diode display (AMOLED), a waveguide display, some other display, or some combination thereof. Note in some examples, the display element 120 may also include some or all of the functionality of the optics block 735.

The optics block 735 may magnify image light received from the electronic display, corrects optical errors associated with the image light, and presents the corrected image light to one or both eyeboxes of the headset 705. In various examples, the optics block 735 includes one or more optical elements. Example optical elements included in the optics block 735 include: an aperture, a Fresnel lens, a convex lens, a concave lens, a filter, a reflecting surface, or any other suitable optical element that affects image light. Moreover, the optics block 735 may include combinations of different optical elements. In some examples, one or more of the optical elements in the optics block 735 may have one or more coatings, such as partially reflective or anti-reflective coatings.

Magnification and focusing of the image light by the optics block 735 allows the electronic display to be physically smaller, weigh less, and consume less power than larger displays. Additionally, magnification may increase the field of view of the content presented by the electronic display. For example, the field of view of the displayed content is such that the displayed content is presented using almost all (e.g., approximately 110 degrees diagonal), and in some cases, all of the user's field of view. Additionally, in some examples, the amount of magnification may be adjusted by adding or removing optical elements.

In some examples, the optics block 735 may be designed to correct one or more types of optical error. Examples of optical error include barrel or pincushion distortion, longitudinal chromatic aberrations, or transverse chromatic aberrations. Other types of optical errors may further include spherical aberrations, chromatic aberrations, or errors due to the lens field curvature, astigmatisms, or any other type of optical error. In some examples, content provided to the electronic display for display is pre-distorted, and the optics block 735 corrects the distortion when it receives image light from the electronic display generated based on the content.

The position sensor 740 is an electronic device that generates data indicating a position of the headset 705. The position sensor 740 generates one or more measurement signals in response to motion of the headset 705. The position sensor 190 is an example of the position sensor 740. Examples of a position sensor 740 include: one or more IMUs, one or more accelerometers, one or more gyroscopes, one or more magnetometers, another suitable type of sensor that detects motion, or some combination thereof. The position sensor 740 may include multiple accelerometers to measure translational motion (forward/back, up/down, left/right) and multiple gyroscopes to measure rotational motion (e.g., pitch, yaw, roll). In some examples, an IMU rapidly samples the measurement signals and calculates the estimated position of the headset 705 from the sampled data. For example, the IMU integrates the measurement signals received from the accelerometers over time to estimate a velocity vector and integrates the velocity vector over time to determine an estimated position of a reference point on the headset 705. The reference point is a point that may be used to describe the position of the headset 705. While the reference point may generally be defined as a point in space, however, in practice the reference point is defined as a point within the headset 705.

The DCA 745 generates depth information for a portion of the local area. The DCA includes one or more imaging devices and a DCA controller. The DCA 745 may also include an illuminator. Operation and structure of the DCA 745 is described above with regard to FIG. 1A.

The audio system 750 provides audio content to a user of the headset 705. The audio system 750 is substantially the same as the audio system 200 described above. The audio system 750 may comprise one or acoustic sensors, one or more transducers, and an audio controller. The audio system 750 may provide spatialized audio content to the user. In some examples, the audio system 750 may request acoustic parameters from the mapping server 725 over the network 720. The acoustic parameters describe one or more acoustic properties (e.g., room impulse response, a reverberation time, a reverberation level, etc.) of the local area. The audio system 750 may provide information describing at least a portion of the local area from e.g., the DCA 745 and/or location information for the headset 705 from the position sensor 740. The audio system 750 may generate one or more sound filters using one or more of the acoustic parameters received from the mapping server 725, and use the sound filters to provide audio content to the user.

The I/O interface 710 is a device that allows a user to send action requests and receive responses from the console 715. An action request is a request to perform a particular action. For example, an action request may be an instruction to start or end capture of image or video data, or an instruction to perform a particular action within an application. The I/O interface 710 may include one or more input devices. Example input devices include: a keyboard, a mouse, a game controller, or any other suitable device for receiving action requests and communicating the action requests to the console 715. An action request received by the I/O interface 710 is communicated to the console 715, which performs an action corresponding to the action request. In some examples, the I/O interface 710 includes an IMU that captures calibration data indicating an estimated position of the I/O interface 710 relative to an initial position of the I/O interface 710. In some examples, the I/O interface 710 may provide haptic feedback to the user in accordance with instructions received from the console 715. For example, haptic feedback is provided when an action request is received, or the console 715 communicates instructions to the I/O interface 710 causing the I/O interface 710 to generate haptic feedback when the console 715 performs an action.

The console 715 provides content to the headset 705 for processing in accordance with information received from one or more of: the DCA 745, the headset 705, and the I/O interface 710. In the example shown in FIG. 7, the console 715 includes an application store 755, a tracking module 760, and an engine 765. Some examples of the console 715 have different modules or components than those described in conjunction with FIG. 7. Similarly, the functions further described below may be distributed among components of the console 715 in a different manner than described in conjunction with FIG. 7. In some examples, the functionality discussed herein with respect to the console 715 may be implemented in the headset 705, or a remote system.

The application store 755 stores one or more applications for execution by the console 715. An application is a group of instructions, that when executed by a processor, generates content for presentation to the user. Content generated by an application may be in response to inputs received from the user via movement of the headset 705 or the I/O interface 710. Examples of applications include: gaming applications, conferencing applications, video playback applications, or other suitable applications.

The tracking module 760 tracks movements of the headset 705 or of the I/O interface 710 using information from the DCA 745, the one or more position sensors 740, or some combination thereof. For example, the tracking module 760 determines a position of a reference point of the headset 705 in a mapping of a local area based on information from the headset 705. The tracking module 760 may also determine positions of an object or virtual object. Additionally, in some examples, the tracking module 760 may use portions of data indicating a position of the headset 705 from the position sensor 740 as well as representations of the local area from the DCA 745 to predict a future location of the headset 705. The tracking module 760 provides the estimated or predicted future position of the headset 705 or the I/O interface 710 to the engine 765.

The engine 765 executes applications and receives position information, acceleration information, velocity information, predicted future positions, or some combination thereof, of the headset 705 from the tracking module 760. Based on the received information, the engine 765 determines content to provide to the headset 705 for presentation to the user. For example, if the received information indicates that the user has looked to the left, the engine 765 generates content for the headset 705 that mirrors the user's movement in a virtual local area or in a local area augmenting the local area with additional content. Additionally, the engine 765 performs an action within an application executing on the console 715 in response to an action request received from the I/O interface 710 and provides feedback to the user that the action was performed. The provided feedback may be visual or audible feedback via the headset 705 or haptic feedback via the I/O interface 710.

The network 720 couples the headset 705 and/or the console 715 to the mapping server 725. The network 720 may include any combination of local area and/or wide area networks using both wireless and/or wired communication systems. For example, the network 720 may include the Internet, as well as mobile telephone networks. In one example, the network 720 uses standard communications technologies and/or protocols. Hence, the network 720 may include links using technologies such as Ethernet, 802.11, worldwide interoperability for microwave access (WiMAX), 2G/3G/4G mobile communications protocols, digital subscriber line (DSL), asynchronous transfer mode (ATM), InfiniBand, PCI Express Advanced Switching, etc. Similarly, the networking protocols used on the network 720 can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 720 can be represented using technologies and/or formats including image data in binary form (e.g. Portable Network Graphics (PNG)), hypertext markup language (HTML), extensible markup language (XML), etc. In addition, all or some of links can be encrypted using conventional encryption technologies such as secure sockets layer (SSL), transport layer security (TLS), virtual private networks (VPNs), Internet Protocol security (IPsec), etc.

The mapping server 725 may include a database that stores a virtual model describing a plurality of spaces, wherein one location in the virtual model corresponds to a current configuration of a local area of the headset 705. The mapping server 725 receives, from the headset 705 via the network 720, information describing at least a portion of the local area and/or location information for the local area. The user may adjust privacy settings to allow or prevent the headset 705 from transmitting information to the mapping server 725. The mapping server 725 determines, based on the received information and/or location information, a location in the virtual model that is associated with the local area of the headset 705. The mapping server 725 determines (e.g., retrieves) one or more acoustic parameters associated with the local area, based in part on the determined location in the virtual model and any acoustic parameters associated with the determined location. The mapping server 725 may transmit the location of the local area and any values of acoustic parameters associated with the local area to the headset 705. In various examples, the mapping server 725 may include associations between communication energy scores and profiles maintained for a user, as further described above in conjunction with FIG. 5 and transmit one or more profiles to the headset 705 for modifying audio.

One or more components of system 700 may contain a privacy module that stores one or more privacy settings for user data elements. The user data elements describe the user or the headset 705. For example, the user data elements may describe a physical characteristic of the user, an action performed by the user, a location of the user of the headset 705, a location of the headset 705, an HRTF for the user, etc. Privacy settings (or "access settings") for a user data element may be stored in any suitable manner, such as, for example, in association with the user data element, in an index on an authorization server, in another suitable manner, or any suitable combination thereof.

A privacy setting for a user data element specifies how the user data element (or particular information associated with the user data element) can be accessed, stored, or otherwise used (e.g., viewed, shared, modified, copied, executed, surfaced, or identified). In some examples, the privacy settings for a user data element may specify a "blocked list" of entities that may not access certain information associated with the user data element. The privacy settings associated with the user data element may specify any suitable granularity of permitted access or denial of access. For example, some entities may have permission to see that a specific user data element exists, some entities may have permission to view the content of the specific user data element, and some entities may have permission to modify the specific user data element. The privacy settings may allow the user to allow other entities to access or store user data elements for a finite period of time.

The privacy settings may allow a user to specify one or more geographic locations from which user data elements can be accessed. Access or denial of access to the user data elements may depend on the geographic location of an entity who is attempting to access the user data elements. For example, the user may allow access to a user data element and specify that the user data element is accessible to an entity only while the user is in a particular location. If the user leaves the particular location, the user data element may no longer be accessible to the entity. As another example, the user may specify that a user data element is accessible only to entities within a threshold distance from the user, such as another user of a headset within the same local area as the user. If the user subsequently changes location, the entity with access to the user data element may lose access, while a new group of entities may gain access as they come within the threshold distance of the user.

The system 700 may include one or more authorization/privacy servers for enforcing privacy settings. A request from an entity for a particular user data element may identify the entity associated with the request and the user data element may be sent only to the entity if the authorization server determines that the entity is authorized to access the user data element based on the privacy settings associated with the user data element. If the requesting entity is not authorized to access the user data element, the authorization server may prevent the requested user data element from being retrieved or may prevent the requested user data element from being sent to the entity. Although this disclosure describes enforcing privacy settings in a particular manner, this disclosure contemplates enforcing privacy settings in any suitable manner.

The foregoing description of the examples has been presented for illustration; it is not intended to be exhaustive or to limit the patent rights to the precise forms disclosed. Persons skilled in the relevant art can appreciate that many modifications and variations are possible considering the above disclosure.

Some portions of this description describe the examples in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one example, a software module is implemented with a computer program product comprising a computer-readable medium containing computer program code, which can be executed by a computer processor for performing any or all the steps, operations, or processes described.

Examples may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples may also relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
obtaining biometric data for a user of an audio system, the biometric data including audio including a voice of the user from a sensor array;
determining a communication energy score of the user from the biometric data for the user;
determining a profile corresponding to the communication energy score, the profile including one or more acoustic parameters associated with the communication energy score;
modifying audio content for presentation by one or more transducers of the audio system based on the one or more acoustic parameters included in the profile; and
presenting the modified audio content to a user via the one or more transducers of the audio system.

2. The method of claim 1, wherein obtaining biometric data for the user of the audio system comprises:
capturing audio including the voice of the user from the sensor array; and
obtaining physiological data of the user from one or more physiological sensors.

3. The method of claim 2, wherein the physiological data includes one or more selected from a group consisting of: a heart rate, a blood pressure, a heart rate variability, an electrocardiogram, a temperature, and any combination thereof.

4. The method of claim 2 or 3, wherein a physiological sensor is included in a device external to the audio system.

5. The method of any preceding claim, wherein determining the communication energy score of the user from the biometric data for the user comprises:
applying a trained model to the biometric data for the user, the model trained by:
generating a set of training examples, each training example including biometric data and having a label indicating a communication energy score for a training example;
applying the model to each training example of the set to generate an output for the training example;
scoring the output for the training example using a loss function and the label of the training example; and
updating one or more parameters of the model by backpropagation based on the scoring.

6. The method of any preceding claim, wherein modifying audio content for presentation by one or more transducers of the audio system based on the one or more acoustic parameters included in the profile comprises:
selecting alternative audio to present to the user in response to determining the communication energy score user changing from a value to an alternative value within a threshold amount of time of audio being presented to the user.

7. The method of any preceding claim, wherein modifying audio content for presentation by one or more transducers of the audio system based on the one or more acoustic parameters included in the profile comprises:
determining an average communication energy score for the user;
determining an extended communication energy score for the user during a time interval;
prompting the user to select a set of acoustic parameters in response to a difference between the average communication energy score and the extended communication energy score exceeding a threshold; and
modifying the audio content based on the selected set of acoustic parameters.

8. The method of any preceding claim, wherein modifying audio content for presentation by one or more transducers of the audio system based on the one or more acoustic parameters included in the profile comprises:
enhancing audio from one or more sound sources captured by a sensor array of the audio system relative to audio from other sound sources captured by the sensor array.

9. The method of any preceding claim, wherein modifying audio content for presentation by one or more transducers of the audio system based on the one or more acoustic parameters included in the profile comprises:
removing audio having one or more characteristics specified by the one or more acoustic parameters.

10. The method of any preceding claim, wherein modifying audio content for presentation by one or more transducers of the audio system based on the one or more acoustic parameters included in the profile comprises:
selecting audio content having characteristics specified by the one or more acoustic parameters included in the profile.

11. A headset comprising:
a frame;
one or more display elements coupled to the frame, each display element configured to generate image light;
a position sensor configured to generate data indicating a position of the headset in a local area; and
an audio system including a transducer array configured to present audio, a sensor array configured to capture audio from a local area including the headset, and an audio controller, the audio controller including a processor and a computer readable storage medium having stored instructions that, when executed by the processor, cause the audio system to carry out the method of any preceding claim.

12. A computer readable storage medium having stored instructions that, when executed by a processor of an audio system, cause the audio system to carry out the method of any of claims 1 to 10.

13. A computer program product comprising instructions that, when executed by a processor of an audio system, cause the audio system to carry out the method of any of claims 1 to 10.
